# EUROPÄISCHE PATENTANMELDUNG

(11) **EP 1 251 615 A2**
(43) Veröffentlichungstag der Anmeldung: **23.10.2002**
(21) Anmeldenummer: 02450042.3
(22) Anmeldetag: 04.03.2002
(51) Int. Cl.: H02B 13/02

(54) **Gekapselte elektrische Schaltzelle für Hochspannung**

(30) Priorität: 17.04.2001 AT 2972001
(71) Anmelder: Alstom Austria AG, A-4018 Linz (AT)
(72) Erfinder: Höfer, Hermann, 4040 Linz (AT)
(74) Vertreter: Rossboth, Werner Heinz

(57) **Zusammenfassung**

Es wird eine gekapselte elektrische Schaltzelle (1) für Hochspannung mit wenigstens zwei gegeneinander geschotteten Räumen, wie Niederspannungskasten (2) und Hochspannungsraum (3), beinhaltend Sammelschienen, Leistungsschalter (4) und Kabelabgänge (8) zur Energieverteilung beschrieben, wobei der Leistungsschalter (4) unterhalb des Niederspannungskastens (2) fest montiert ist und Gegenkontakte (41, 42) aufweist, die mit Trennkontakten (51, 61) in Eingriff bringbar sind. Die paarweise übereinander angeordneten Trennkontakte (51, 61) sind auf horizontal verschiebbaren Isolatoren (5, 6) montiert und über flexible Verbinder (52, 62) jeweils mit fixierten Anschlüssen (53, 63) der Sammelschienenabgangsleiter (54, 55, 56) oder Kabelabgangsleiter (64) elektrisch leitend verbunden. Die horizontal verschiebbaren Isolatoren (5, 6) sind V-förmig auf einem seitlich geführten Querträger (65) angeordnet, welcher mit einer seitlich geführten horizontal zwischen den Isolatoren (5, 6) vorgesehenen isolierenden Schutzplatte (71) fest verbunden ist.

## Beschreibung

Die Erfindung bezieht sich auf eine gekapselte elektrische Schaltzelle für Hochspannung mit wenigstens zwei gegeneinander geschotteten Räumen, wie Niederspannungskasten und Hochspannungsraum, beinhaltend Sammelschienen, Leistungsschalter und Kabelabgänge zur Energieverteilung, wobei der Leistungsschalter unterhalb des Niederspannungskastens fest montiert ist und Gegenkontakte aufweist, die mit Trennkontakten in Eingriff bringbar sind.

Zum Unterschied von geschotteten Schaltzellen, die getrennte Räume für das Sammelschienensystem, den Leistungsschalter, die Kabelanschlüsse und den Niederspannungsteil aufweisen müssen, werden Schaltzellen der eingangs genannten Art als teilgeschottete Schaltzellen bezeichnet.

Gekapselte Schaltzellen, bei denen eine Trennfunktion durch Verfahren des kompletten Leistungsschalters erfolgt, sind beispielsweise aus den AT-PS 397893, AT-GM 2759 und DE-PS 19633524 bekannt. Der Leistungsschalter ist bei diesen Ausführungsformen entweder auf einem Trennwagen oder Geräteeinschub montiert, der von einer Kontaktstellung in eine Trennstellung ausfahrbar ist.

Aus der DE-PS 19613151 ist eine gekapselte elektrische Schaltzelle für Mittelspannung mit einem Sammelschienenraum und einem Lasttrennschalterraum bekannt. Sammelschienenabgangsleiter und Lasttrennschalteranschlüsse sind jeweils über eine verfahrbare Leiterverbindung elektrisch leitend miteinander verbindbar.

Die DE-OS 37 21 575 beschreibt eine gekapselte gasisolierte Schaltanlage, bei der eine Spannungswandleranordnung mittels beweglicher, mit flexiblen Leitern verbundenen Kontakte von den Phasenleitern der Schaltanlage bei der dielektrischen Prüfung der Schaltanlage abtrennbar ist.

In der DE-GM 90 00 374 ist eine gekapselte, trennerlose Schaltanlage mit verschiebbaren Isolierstoff-Schutzplatten beschrieben, um ein gefahrloses Arbeiten im Anschlußraum einer Schaltzelle auch bei ausgefahrenem Schaltgerät zu ermöglichen.

Durch die in der Folge aufgezeigte erfindungsgemäße Ausführung wird bezweckt, eine gekapselte elektrische Schaltzelle für Hochspannung zu schaffen, die erhebliche Vereinfachungen hinsichtlich des apparativen Aufwandes und eine Minimierung der Außenabmessungen erlaubt, keinen Sammelschienenraum erfordert und dennoch einen hohen Sicherheitsstandard im Falle erforderlicher Revisionsarbeiten erfüllt.

Dies wird dadurch erreicht, daß die paarweise übereinander angeordneten Trennkontakte auf horizontal verschiebbaren Isolatoren montiert sind und über flexible Verbinder jeweils mit fixierten Anschlüssen der Sammelschienenabgangsleiter oder Kabelabgangsleiter elektrisch leitend verbunden sind, wobei die horizontal verschiebbaren Isolatoren V-förmig auf einem seitlich geführten Querträger angeordnet sind, welcher mit einer seitlich geführten, horizontal zwischen den Isolatoren vorgesehenen isolierenden Schutzplatte fest verbunden ist.

Mit Hilfe der verschiebbaren Isolatoren sind die Trennkontaktpaare auf einfache Art in Trennstellung oder Kontaktstellung mit den Leistungsschalter-Gegenkontakten zu bringen, ohne daß ein Verfahren des kompletten, relativ schweren Leistungsschalters erforderlich ist. Durch die V-förmige Anordnung der horizontal verschiebbaren Isolatoren auf dem seitlich geführten Querträger wird eine besonders einfache, platzsparende Ausführung erreicht. Die zwischen den Isolatoren vorgesehene, mit dem Querträger fest verbundene isolierende Schutzplatte erhöht nicht nur die Spannungsfestigkeit zwischen den übereinander angeordneten Trennkontakten, sondern dient auch als Berührungsschutz bei bestimmten Betriebszuständen der Schaltzelle.

Bevorzugterweise steht der Querträger mit einem Kniehebelsystem in Wirkverbindung. Das Kniehebelsystem kann so ausgebildet sein, daß sich nach Kontakteingriff der Trennkontakte in den Gegenkontakten des Leistungsschalters eine Totpunktlage der Hebel des Kniehebelsystems ergibt. Die Trennkontakte sind dadurch in ihrer Kontakteingriffslage fixiert und gegen Kurzschlußkräfte gesichert.

In Schaltanlagen können Betriebszustände eintreten, bei denen beispielsweise aus Revisionsgründen in Schaltzellen an Trennkontakten, Kabelanschlüssen oder sonstigen elektrischen Komponenten gearbeitet werden muß, während andere Komponenten in der Schaltzelle unter Spannung bleiben müssen, um die Versorgung mit elektrischer Energie sicherzustellen. In diesen Fällen müssen die unter Spannung verbleibenden Komponenten zum Schutze des Revisionspersonals mit isolierenden Schutzplatten abgedeckt werden, welche die Anforderungen der Sicherheitsbestimmungen hinsichtlich elektrischer und mechanischer Festigkeit sowie Brennverhalten erfüllen. Solche isolierende Schutzplatten sind beispielsweise aus der AT-PS 398143 bekannt.

Zum Schutze gegen zufälliges Berühren unter Spannung stehender Trennkontakte in Trennstellung, mit diesen verbundenen flexibler Verbinder oder Sammelschienenabgangsleiter können weitere mit der Schaltzellenkapselung fest verbundene isolierende Schutzplatten und eine verschiebbare, über ein Gestänge betätigbare isolierende Schutzplatte vorgesehen sein.

Die flexiblen Verbinder können aus Kontaktlamellen bestehen. Die Bewegung der Trennkontaktpaare von ihrer Trennstellung in Kontaktstellung oder umgekehrt erfolgt relativ langsam, so daß die Elastizität der Kontaktlamellen völlig ausreicht. Kontaktlamellen sind außerdem gegen im Kurzschlußfall wirkende Kräfte zwischen den Trennkontaktpaaren ausreichend widerstandsfähig.

Unterhalb des festmontierten Leistungsschalters kann ein zweiter Niederspannungskasten für Befehls-, Anzeige- und Steuerelemente des Schutz- und Leitsystems angeordnet sein. Gekapselte elektrische Schaltzellen der angeführten Art, beispielsweise für eine Betriebsspannung von 36 kV, weisen etwa eine Kapselungshöhe von 2,5 m auf. Der zweite Niederspannungskasten befindet sich daher in günstiger Sicht- und Bedienungshöhe.

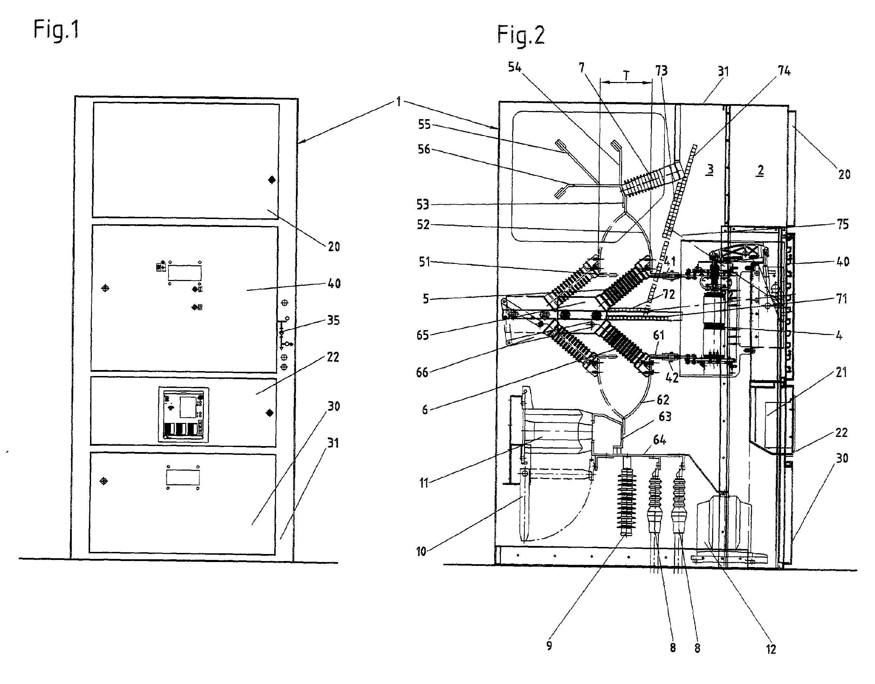

Im folgenden wird an Hand der beiliegenden Zeichnung ein Ausführungsbeispiel des Erfindungsgegenstandes näher erläutert: Es zeigen Fig. 1 die Frontansicht einer dreipoligen teilgeschotteten Schaltzelle für Hochspannung und Fig. 2 die Schnittdarstellung dieser Schaltzelle.

Die teilgeschottete Schaltzelle 1 besitzt eine äußere Kapselung 31, die aus Metallblechteilen zusammengesetzt ist. Der innere Raum der Schaltzelle 1 ist in drei gegeneinander geschottete Räume, den Hochspannungsraum 3 und zwei Niederspannungskästen 2, 21, unterteilt, wie aus Fig. 2 ersichtlich ist.

Sämtliche Räume 2, 3, 21 sind von der Bedienungsseite der Schaltzelle 1 aus über Paneele 20, 22, 30, 40 zugänglich. Die Paneele 30, 40 sind als druckfest verriegelbare Türpaneele ausgebildet, damit im Falle eines Störlichtbogens im Hochspannungsraum 3 Bedienungspersonal nicht gefährdet ist.

Aus der in Fig. 1 gezeichneten Frontansicht der Schaltzelle 1 erkennt man, daß die Türpaneele 30, 40 Sichtfenster aufweisen, wodurch eine visuelle Kontrolle der Hochspannungsgeräte möglich ist. Neben der rechten Seite des Türpaneels 40 ist ein Blindschaltbild 35 mit Stellungsmeldern zur Anzeige der Schaltzustände angebracht. Im Bereich des Blindschaltbildes 35 sind auch die Wellenenden der Kurbelantriebe mechanisch bewegbarer Teile im Inneren der Schaltzelle 1 herausgeführt.

In Fig. 2 ist die teilgeschottete Schaltzelle 1 im Schnitt dargestellt. Hinter dem Türpaneel 40 ist der als Einheit ausgeführte dreipolige Vakuum-Leistungsschalter 4 mit seinem Antrieb und den Gegenkontakten 41, 42 montiert und mit Metallblechteilen der Kapselung 31 fest verbunden. Die Gegenkontakte 41, 42 befinden sich gerade im Kontakteingriff mit den Trennkontakten 51, 61, die auf den V-förmig angeordneten Isolatoren 5, 6 fest montiert sind. Die vorzugsweise aus Gießharz hergestellten Isolatoren 5, 6 sind auf einem horizontal verschiebbaren, seitlich an der Kapselung 31 geführten Querträger 65 montiert, der mit einem Kniehebelsystem 66 in Wirkverbindung steht.

Das Kniehebelsystem 66 ist entweder über einen Handkurbelantrieb oder einen elektrischen Getriebemotor betätigbar. Bei der in Fig. 2 gezeichneten Stellung befinden sich drei paarweise angeordnete Trennkontakte 51, 61 in Kontakteingriff mit den zugeordneten Gegenkontakten 41, 42 des dreipoligen Vakuum-Leistungsschalters 4. Im eingeschalteten Zustand des Vakuum-Leistungsschalters 4 ist somit eine elektrische Verbindung vom dreiphasigen Sammelschienensystem über die Sammelschienenabgangsleiter 54, 55, 56, fixierten Anschlüsse 53, flexible Verbinder 52, Kontakte 51, 41, Vakuum-Leistungsschalter 4, Kontakte 42, 61, flexibel Verbinder 62, fixierte Anschlüsse 63 und Kabelabgangsleiter 64 zu den Kabelabgängen 8 zur Energieverteilung hergestellt.

Im ausgeschalteten Zustand des Vakuum-Leistungsschalters 4 kann das Kniehebelsystem 66 aktiviert werden. Der seitlich geführte Querträger 65 verschiebt sich in Folge horizontal gegen die Rückwand der Kapselung 31, wobei die beiden Hebel des Kniehebelsystems 66 aus ihrer Totpunktlage in die strichliert gezeichnete Winkelstellung gelangen. Gleichzeitig entsteht zwischen den Gegenkontakten 41, 42 und Trennkontakten 51, 61 ein als Trennstrecke T bezeichneter Sicherheitsabstand.

Um im Falle erforderlicher Revisionsarbeiten im Inneren des Hochspannungsraumes 3 einen hohen Sicherheitsstandard erfüllen zu können, sind mit der Kapselung 31 fest verbundene isolierende Schutzplatten 72, 73 sowie verschiebbare isolierende Schutzplatten 71, 74 vorgesehen. Die eine fest montierte isolierende Schutzplatte 72 ist zwischen den Isolatoren 5, 6, unmittelbar an den Querträger 65 angrenzend, horizontal angeordnet, wogegen die andere Schutzplatte 73 in zu den Sockeln der Stützisolatoren 7 schräger Lage montiert ist. Die Stützisolatoren 7 tragen die fixierten Anschlüsse 53. Von den verschiebbaren isolierenden Schutzplatten 71, 74 ist die eine mittig zwischen den Isolatoren 5, 6 horizontal angeordnet und mit dem Querträger 65 fest verbunden, die andere dagegen parallel zur Schutzplatte 73.

Die isolierende Schutzplatte 74 ist über ein Gestänge 75 von einer oberen in eine untere Lage verschiebbar und schließt in der unteren Lage mit der horizontal angeordneten Schutzplatte 71 etwa einen Winkel von 115 Grad ein.

Durch das Schutzplattensystem 65, 71 bis 75 ist in der Trennstellung des Querträgers 65 der Sammelschienenbereich, einschließlich der Trennkontakte 51 vollkommen gegen zufälliges Berühren gesichert, so daß bei geschlossenem Erdungsschalter 10 gefahrlos Revisionsarbeiten im unteren Hochspannungsraum 3 mit den Kabelabgängen 8, Überspannungsableitern 9, Stromwandlern 11 und Spannungswandlern 12, sowie am Vakuum-Leistungsschalter 4 vorgenommen werden können.

Es versteht sich von selbst, daß der Antrieb des Vakuum-Leistungsschalters 4, Erdungsschalters 10, Kniehebelsystems 66 und des Gestänges 75 gegeneinander elektrisch und/oder mechanisch verriegelt und damit gegen Fehlschaltungen gesichert sind.

Anstelle des dreipoligen Vakuum-Leistungsschalters 4 kann auch ein Leistungsschalter mit anderem Lichtbogen-Löschsystem, Lastschalter oder Lasttrennschalter montiert sein.

Die Sammelschienen und Sammelschienenabgangsleiter 54, 55, 56 können teilisoliert sein, um eine gedrängtere Ausführung zu ermöglichen und das Wandern eines eventuell auftretenden Störlichtbogens zu verhindern.

Im Bereich der Sammelschienendurchführungen zu benachbarten Schaltzellen kann in der Kapselung 31 eine Isolierstoffplatte, beispielsweise aus melaminharzbeschichtetem Hartpapier, eingesetzt sein, wodurch eine kompaktere Bauweise möglich ist.

## Patentansprüche

1. Gekapselte elektrische Schaltzelle für Hochspannung mit wenigstens zwei gegeneinander geschotteten Räumen, wie Niederspannungskasten und Hochspannungsraum, beinhaltend Sammelschienen, Leistungsschalter und Kabelabgänge zur Energieverteilung, wobei der Leistungsschalter unterhalb des Niederspannungskastens fest montiert ist und Gegenkontakte aufweist, die mit Trennkontakten in Eingriff bringbar sind, **dadurch gekennzeichnet, daß** die paarweise übereinander angeordneten Trennkontakte (51, 61) auf horizontal verschiebbaren Isolatoren (5, 6) montiert sind und über flexible Verbinder (52, 62) jeweils mit fixierten Anschlüssen (53, 63) der Sammelschienenabgangsleiter (54; 55; 56) oder Kabelabgangsleiter (64) elektrisch leitend verbunden sind, wobei die horizontal verschiebbaren Isolatoren (5, 6) V-förmig auf einem seitlich geführten Querträger (65) angeordnet sind, welcher mit einer seitlich geführten, horizontal zwischen den Isolatoren (5, 6) vorgesehenen isolierenden Schutzplatte (71) fest verbunden ist.

2. Gekapselte elektrische Schaltzelle nach Anspruch 1, **dadurch gekennzeichnet, daß** der Querträger (65) mit einem Kniehebelsystem (66) in Wirkverbindung steht.

3. Gekapselte elektrische Schaltzelle nach Anspruch 1 oder 2, **dadurch gekennzeichnet, daß** sich nach Kontakteingriff der Trennkontakte (51; 61) in den Gegenkontakten (41; 42) des Leistungsschalters (4) eine Totpunktlage der Hebel des Kniehebelsystems (66) ergibt.

4. Gekapselte elektrische Schaltzelle nach einem der Ansprüche 1 bis 3, **dadurch gekennzeichnet, daß** zum Schutz gegen zufälliges Berühren unter Spannung stehender Trennkontakte (51) in Trennstellung, flexibler Verbinder (52), fixierter Anschlüsse (53) oder Sammelschienenabgangsleiter (54, 55, 56) weitere mit der Schaltzellenkapselung (31) fest verbundene isolierende Schutzplatten (72, 73) und eine verschiebbare, über ein Gestänge (75) betätigbare isolierende Schutzplatte (74) vorgesehen sind.

5. Gekapselte elektrische Schaltzelle nach einem der Ansprüche 1 bis 5, **dadurch gekennzeichnet, daß** die flexiblen Verbinder (52, 62) aus Kontaktlamellen bestehen.

6. Gekapselte elektrische Schaltzelle nach einem der Ansprüche 1 bis 6, **dadurch gekennzeichnet, daß** unterhalb des fest montierten Leistungsschalters (4) ein zweiter Niederspannungskasten (21) für Befehls-, Anzeige- und Steuerelemente eines Schutz- und Leitsystems angeordnet ist.
